# EUROPEAN PATENT SPECIFICATION

(11) **EP 0 839 296 B1**
(45) Date of publication and mention of the grant of the patent: **11.12.2002**
(21) Application number: 95936299.7
(22) Date of filing: 05.10.1995
(51) Int. Cl.: F16K 11/087

(54) **AN IMPROVED BALL VALVE FAUCET**
HAHN MIT KUGELVENTIL
ROBINET A TOURNANT SPHERIQUE AMELIORE

(30) Priority: 05.10.1994 DK 115394
(43) Date of publication of application: 06.05.1998
(73) Proprietor: MASCO CORPORATION, Taylor, MI 48180 (US)
(72) Inventor: TANG, Tage, D., DK-7120 Vejle O (DK)
(74) Representative: Oppermann, Ewald, Dipl.-Ing.
(86) International application number: US9513033
(87) International publication number: WO96012128

(56) References cited:
- WO-A-92/22765
- WO-A-93/11382
- WO-A-94/13985
- US-A- 2 592 062
- US-A- 3 056 418
- US-A- 3 628 570
- US-A- 4 449 551

## Description

### TECHNICAL FIELD

The field of this invention relates to a faucet mixer valve and more particularly to a ball valve cartridge for a mixer valve.

### BACKGROUND OF THE DISCLOSURE

Single handle faucets, commonly referred to as mixing valves, that control the flow of both hot and cold water have seen vast consumer acceptance. The faucets are commonly constructed such that a handle or knob is movable in two distinct directions to adjust the mix of hot and cold water and to adjust the volume rate, i.e. flow.

The two basic types of mixer valves that have seen widest commercial acceptance are plate valves and ball valves. Ball valves offer a reliable compact construction that is durable. Plate valves offer a drive mechanism that have long been amenable to be packaged into a cartridge form.

Known plate valve cartridges have housed the movable and fixed valve plates. The cartridge can easily be removed and replaced with another in order to effect an easy repair to the faucet. After the water supply is turned off to the faucet, the faucet is merely opened and the cartridge is easily replaced. This type of repair can be accomplished without the need to call in skilled labor.

While plate valves have long been incorporated into a cartridge format, ball valves have only recently been amenable to a cartridge construction. The difficulties in the development of a commercially successful cartridge for a ball valve are several fold. Firstly, the floating nature of the traditional ball valve demanded that any cartridge completely surround and capture the ball valve, otherwise the ball valve simply falls out of the bottom of the cartridge. Secondly, the compact nature of the ball valve construction in the faucet body leaves little room for the inclusion of a cartridge. The introduction of traditional cartridges that house and capture the ball into the faucet housing undesirably demands that the housing be made taller to incorporate the added height needed for the inclusion of the cartridge.

Furthermore, traditional cartridges impede selective repair to worn elastomeric seals. The cartridge houses both the moving valve element and the fixed valve ports which often include the elastomeric port seals. Most of the wear and resulting leakage in a faucet is the result of the repetitive motion of the moving ball valve element on the elastomeric port seals. Because the seals are encased in the cartridge, the entire cartridge is replaced including the many yet good cartridge components that still have a remaining long useful life. The desire to eliminate waste however is offset by the need to simplify the repair operation. Furthermore, many cartridges are permanently assembled together and do not permit temporary dismantling.

Even for cartridges that can be dismantled, the advantages of a cartridge is lost if the cartridge dismantles into all of its component parts. The movable valve element falls out and is often not replaced in its correct orientation. This mis-installation can easily occur for symmetrical plate valves and ball valves which are inherently symmetrical. It takes a knowledgeable and skilled person to avoid mounting symmetrically appearing ball valves in a cartridge in an incorrect orientation.

The ball valve cartridges that have been devised allow the handle to be operated in the same fashion as known plate type mixer valves. Some of these ball type mixer valves require the introduction of another moving part in the form of a rotatable plate mounted above the ball valve element. One such ball valve is disclosed in United States Patent No. 4,449,551 issued to Lorch on May 22, 1984. Another ball construction which mimics the handle motion of plate valves is disclosed in PCT publication WO 92/22765 published on December 23, 1992. This ball incorporates a horizontal pin extending through its equator to vertically affix the ball in the housing.

The ball valve construction of the faucets disclosed in these two above noted disclosures allows for an orbiting motion of the handle about a fixed longitudinal axis of the faucet body and a rocking, i.e. pivoting, motion about a movable horizontal axis relative to the valve body. The movable horizontal axis is perpendicular to the longitudinal axis of the faucet body and is fixed with respect to the handle such that it moves about the housing as the handle rotates about the fixed longitudinal axis. By having a fixed longitudinal axis, ball valves with this type of motion can be expeditiously fixed within a cartridge by use of a horizontal pin extending through the ball and into a horizontal slot in a cartridge.

The temperature mix of the hot and cold water can be accurately adjusted by orbiting the handle about the longitudinal axis when the handle is at or near the off position.

However, the temperature sensitivity and fine temperature adjustment of the above described ball valve construction is diminished when the valve is turned on toward the full open position. This diminishing effect is due to the fact that the control stem is often attached to a levered handle that extends forward from the stem. Upon opening motion ,i.e. rocking of the stem rearwardly, the lever handle distal end moves closer toward the vertical fixed longitudinal axis of temperature rotation. Thus the effective torque arm length for temperature adjustment is substantially shortened. This shortened arm of torque inhibits fine temperature adjustment.

Alternative types of ball drive mechanisms are available and may be desirable in certain situations where accurate temperature adjustment is needed during full flow conditions. These alternative types of ball drive mechanisms have the fixed axis of rotation being transverse to the longitudinal axis of the faucet body i.e. horizontal on many lavatory faucets. One ball valve drive mechanism has a second horizontal fixed axis and the movable axis being substantially perpendicular thereto. The movable axis of rotation is pivotable in a vertical plane about the fixed axis with motion of the ball and centered about a horizontal position. An example of this type of ball drive mechanism is disclosed in United States Patent 3,056,418 issued to Adams et al. on October 2, 1962. Another known ball drive mechanism has the fixed and movable axis in the vice versa position from that of the Adams disclosure. An example of this type of ball drive mechanism is disclosed in United States Patent 2,592,062 issued to Perry on April 8, 1952 and forming the preamble portion of claim 5.

However, these alternative types of ball valve drive mechanisms that provide for better temperature adjustment at high flow rates have not been amenable to be advantageously installed in a cartridge assembly for several reasons. One reason is partly due to the absence of a fixed axis of rotation that is oriented longitudinally through the faucet body. This absence of the fixed longitudinal axis has impeded development of a mechanism that adequately packages the ball within a conveniently sized cartridge while both affixing the ball in a vertical locked position and maintaining the restraints to pivot the ball about the required two axes, the fixed one being horizonal and a movable one perpendicular thereto.

A further ball valve construction is disclosed in PCT publication WO 94/13985 published on June 23, 1994, which forms the preamble portion of the independent claims 1 and 9, respectively.

According to this state of the art a faucet mixer valve comprises a movable ball valve element mounted in a housing body that defines a cavity. The housing body has a plurality of inlet ports and an outlet port in fluid communication with the cavity, wherein the ball valve element cooperates with the inlet ports to control liquid flow in both flow rate and temperature mix through the ports. Further, the housing body has a control opening therethrough, through which a control stem connected to the ball valve element extends. This mixer valve is in cartridge form with a cartridge having a housing member. The cartridge housing member comprises an upper opening for allowing the control stem passing therethrough and a lower end. Further, the cartridge housing member has a seal seat about the upper opening, in which a sealing gasket is seated which sealingly abuts against the movable ball valve element.

This prior art cartridge housing member further comprises a circumferentially disposed, i.e. horizontally extending slot slidably and pivotably receiving a pin transversely extending from the ball valve element such that the ball valve element is rotatable about a first axis that is aligned with the pin and a second axis that is transverse to the first axis and the slot.

What is needed is an expeditiously manufactured ball valve construction that provides for mounting of the ball element in a cartridge for a mixer valve that operably seats the ball valve. What is also needed is an expeditiously manufactured faucet with a ball valve element that provides for ease in temperature adjustment during the full on position.

### SUMMARY OF THE DISCLOSURE

The above objects are solved by the features of claims 1, 5 and 9, respectively. Advantageously developed embodiments are subject-matter of the dependent claims 2 to 4, 6 to 8 and 10 to 14.

In accordance with one aspect of the invention, a faucet mixer valve has a movable ball valve element pivotably mounted in a cavity of a housing body. The cavity is in fluid communication with a plurality of inlet ports and at least one outlet port. The ball valve element has at least a partially spherical valving surface and a plurality of inlet openings in its valving surface. The openings cooperate with the ports to control fluid flow in both flow rate and temperature mix. The ball valve element has an attached control stem that passes through a control opening in the housing body. A handle may be operably connected to the control stem. A sealing gasket is seated in a seal seat about the control opening and sealingly abuts against the movable ball valve element and housing body.

The ball valve element has a pin extending therefrom in a plane of symmetry interposed between the hot and cold water openings in the ball valve element. The housing body has a first longitudinally extending slot therein that extends along the plane of symmetry between the hot and cold inlet ports. The slot slidably and pivotably receives the pin such that the ball valve element is rotatable along a first movable axis that is aligned with the pin and a second fixed axis that is orthogonal to both the longitudinal slot and the first axis.

Preferably, the housing body includes a cartridge housing member that pivotably receives the ball valve element. The housing body has a cavity which is sized to seat the cartridge housing member. The cartridge housing member has an upper opening for allowing the control stem to pass therethrough. The cartridge housing member has a first longitudinally extending slot therein. The slot is within an inner wall of the cartridge housing member and the pin transversely extends from the ball valve element and is slidably and pivotably received in the slot in the cartridge housing member such that the ball valve element rotates along the first and second axes.

The cartridge housing member has a lower opening through which the ball valve element protrudes to be cooperative with the inlet ports such that the ball valve element directly abuts elastomeric inlet port seals housed at the downstream end of respective inlet ports. The cartridge housing member preferably has a second longitudinally extending slot diametrically opposite the first longitudinally extending slot. The pin preferably extends completely through the ball valve element such that it has first and second distal ends extending at diametrically opposed sections of the ball valve element with each pin end received in the respective first and second slots in the cartridge housing member. The respective first and second slots have a lower end spaced above the lower opening. Each lower end has an abutment shoulder for abutting the respective pin ends. The respective pin ends are spaced farther apart than the diameter of the lower opening such that the ball valve element is retained within said cartridge housing member by the pin ends in the slots above the abutment shoulders.

In one embodiment, one slot in the cartridge housing member has a side passage extending through to the outer wall of the cartridge housing member. The pin is passed through the side passage to be press fitted into the ball valve element for installation of the ball valve element into the cartridge housing member.

In one embodiment, the upper opening of the cartridge or valve body is shaped and positioned to be symmetrical about the plane of symmetry containing the axis of the longitudinal slots. The opening has a front semi-circular arced front edge of approximately 180° and two radially running rear straight edges forming an angled corner of approximately 160°. A notch is positioned at the midpoint of the semi-circular edge and sized to laterally receive the control stem.

Desirably, the ball valve element has a pair of cold water inlet openings separated by a thin dividing rib and a pair of hot water inlet openings separated by another thin dividing rib. The plane of symmetry is interposed between the two pairs of inlet openings when the ball valve element is in a intermediate mix position. It is also desirable that the ball valve element has a pair of outlet openings arranged symmetrically between the cold and hot water inlet openings.

In accordance with another aspect of the invention, a ball valve cartridge assembly has a ball valve element with a pin extending therefrom and extending into a vertical slot at the inner wall of a cartridge housing member.

### BRIEF DESCRIPTION OF THE DRAWINGS

Reference now is made to the accompanying drawings in which:
Figure 1 is a side elevational and partially segmented view of a faucet mixer valve according to one embodiment of the invention illustrating the faucet in the off position;
Figure 2 is a fragmentary cross-sectional view of the cartridge assembly and faucet body taken along lines 2-2 shown in figure 1;
Figure 3 is an exploded perspective view of the faucet mixer valve shown in Figure 1;
Figure 4 is an enlarged fragmentary cross-sectional view of the cartridge assembly shown in Figure 1;
Figure 5 is a bottom plan view of the. cartridge assembly shown in Figure 1; and
Figure 6 is a top plan view of the cartridge assembly.

### DETAILED DESCRIPTION OF THE PREFERRED EMBODIMENT

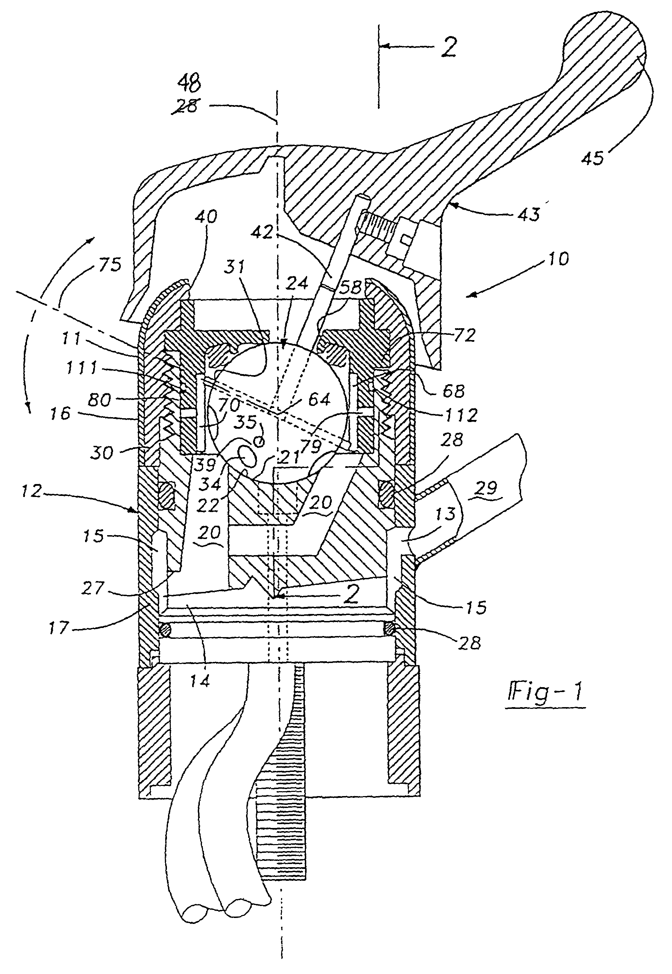

Referring now to Figures 1-3, a faucet mixer valve 10 has a conventional valve housing or body 12 that is formed from a housing base member 14 and a cover assembly 16. The base member 14 has a cavity 22 formed therein with a substantially semi-spherical lower surface 21. Two inlet ports 18 and 19 for cold and hot water have downstream ends counter bored into the lower surface 21 to form a seat for two biasing springs 23 which bias tubular elastomeric sealing elements 25 against a ball valve element 24 that is housed in a cartridge assembly 26. A front and rear outlet passage 20 extends from the lower surface 21 and through a side cylindrical wall 27 for the passage of mixed water from cavity 22.

A conventional tubular shell 17 is sealingly and slidably mounted about the lower base member 14 and forms an annular chamber 15 in fluid communication with the front and rear outlet passages 20. O-ring seals 28 interposed between the housing 12 and tubular shell 17 prevent undesirable water leakage therebetween. A spout 29 is affixed to the shell 17 and in fluid communication with the annular chamber 15 through aperture 13 in shell 17. The cover assembly 16 includes a threaded cap member 30 that is screwed onto the base member 14. A cosmetic shell 11 can be positioned over the member 30.

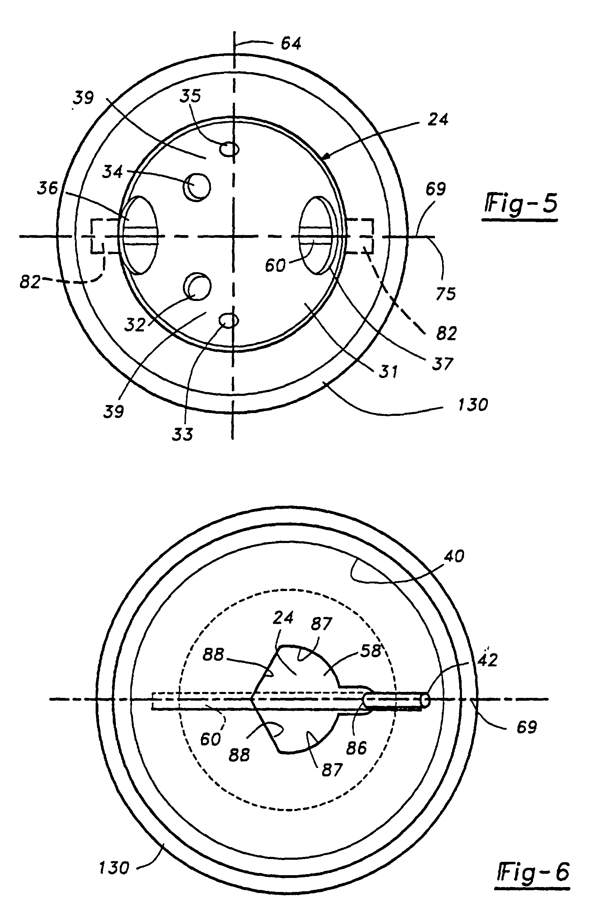

As clearly shown in Figure 5, the ball valve element 24 has a substantially spherical valve surface 31 with an appropriately shaped and positioned cold inlet openings 32 and 33, and hot inlet openings 34 and 35. The cold inlet openings 32 and 33 are spaced apart to form a thin rib 39 therebetween. The hot water inlet openings 34 and 35 are similarly spaced apart to also have a thin similar rib 39 interposed therebetween. A pair of outlet openings 36 and 37 also extend therethrough. The shape of the surface 31 substantially complements the concave shape of the lower surface 21 of cavity 22. The openings 32, 33, 34 and 35 cooperate with the respective inlet ports 18 and 19 and outlet openings 36 and 37 that are in fluid connection with outlet passage 20 to regulate the mixture ratio of water and flow rate, i.e. volume of total water per unit time from the two inlet ports 18 and 19 to the outlet passage 20.

The cover assembly 16 has a control opening 40 therethrough. The cover 16 is positioned such that the longitudinal axis 48 of the valve housing 12 passes through the control opening 40. The cartridge 26 includes a housing member 56 that has an upper opening 58 aligned under opening 40.

A control stem 42 is fixedly connected to the ball valve element 24. The control stem 42 extends through the control opening 40. The control stem 42 is constructed to be affixed to a faucet handle 43 in a conventional fashion. The handle 43 is a lever style handle with a distal lever end 45.

The cartridge assembly 26 has the ball. valve element 24 pivotably mounted to the cartridge housing member 56. The cartridge housing member 56 may be manufactured from known plastic material suitable for faucet applications. The ball valve element 24 also has a cylindrical pin 60 extending therethrough with its distal ends 62 extending to the exterior of ball valve surface 31. The pin 60 may be affixed to the ball valve element 24 by being press fitted into diametrically opposed holes 61 through surface 31. The pin 60 is positioned to intersect the center 66 of the ball valve element 24 and lie perpendicular to control stem 42.

Each distal end 62 is positioned in a longitudinally extending slot 68 and 70 in the interior cylindrical wall 57 of cartridge housing member 56. The slots 68 and 70 are diametrically opposed and are vertically oriented as shown in the figures. It should be understood however when the faucet valve is installed on a wall, the longitudinal direction may be horizontal. The lower end of slots 68 and 70 end above a lower open end 92 of the cartridge housing member 56 to form abutment shoulders 82. The shoulders 82 are spaced apart at a distance less than the spacing of ends 62 to retain the ball valve element 24 in the cartridge housing member 56.

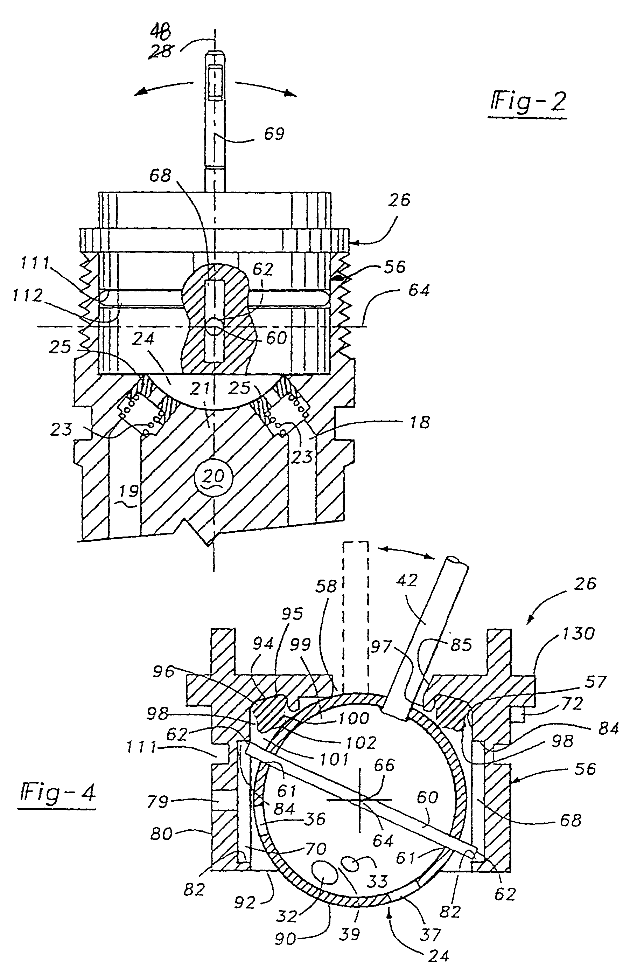

Each slot 68 and 70 has a central axis disposed in a plane of symmetry 69. Slot 70 has a window passage 79 that extends through the exterior wall 80 of cartridge housing member 56. As shown in Figure 2, the slots 68 and 70 have a width to form only enough clearance to allow sliding movement of the pin ends 62 in slots 68 and 70 about a fixed horizontal axis 64 that is perpendicular to plane 69 and thus also perpendicular to longitudinal slots 68 and 70. Desirably no lateral spacing exists between slots 68 and 70 and the pin ends 62 such that no significant rotation of the ball valve element 24 along a direction that is commonly referred to as the width of the slot occurs.

Because each distal end 62 is cylindrical, they have a circular cross section that allows them to pivot in slots 68 and 70 about an axis 75 of the pin 60. The axis 75 lies in the plane of symmetry 69 that is perpendicular to horizontal fixed axis 64. Axis 75 intersects axis 64 at the center 66 and is movable with the pin 60 i.e. it remains stationary with respect to the ball valve element 24 but is movable with respect to the valve housing 12. Axis 75 is also perpendicular to the axis of the control stem 42. In other words, movable axis 75 is orthogonal and remains orthogonal to both the control stem 42 and the fixed axis 64 during normal operation of the faucet. Axis 64 is perpendicular to both the axis 75 and the longitudinal slots 68 and 70.

The ball valve element 24 has a lower section 90 of the valving surface 31 protruding through the large lower open end 92 of the cartridge housing member 56. The protruding section 90 is a significant portion of the ball valve element 24 as clearly shown in Figures 1 and 2. The valving surface 31 with the inlet openings 32, 33, 34, and 35 and outlet openings 36 and 37 operably and directly abuts the spring biased sealing elements 25 housed in inlet ports 18 and 19 as shown in Figure 2.

The inlet ports 18 and 19 are symmetrically placed about opposite sides of the plane of symmetry 69. The outlet ports 20 are aligned with the plane of symmetry 69 under the pin 60. The pin 60 extends between the inlet ports 18 and 19. Cold water inlet openings 32 and 33 and hot water inlet openings 34 and 35 are symmetrically positioned about the plane of symmetry 69 when the ball valve element 24 is in an intermediate temperature position as illustrated in figures 2 and 5. Outlet openings 36 and 37 are also aligned symmetrically with the plane of symmetry 69 when the ball valve element 24 is in the intermediate mix position as shown in figures 2 and 5.

The upper section 99 of ball valve element 24 is housed within the interior chamber 101 of cartridge housing member 56 defined in part by interior depending cylindrical wall 80. The interior chamber 101 is in fluid communication with cavity 22 of valve housing 12.

As shown in Figures 1 and 4, an annular gasket seat 94 is positioned about the upper opening 58 and faces ball valve element 24 within chamber 101. The gasket seat 94 is canted with its inner periphery 95 positioned higher than its outer periphery 96. A downwardly depending shoulder or collar 97 vertically depends at the inner periphery 95 and is in close proximity to the ball valve element upper section 99 to allow for manufacturing tolerances.

An annular gasket seal ring 98 is mounted in the cartridge housing member 56 against the seat 94 such that it is placed under a preload with its inner periphery 100 twisted to be higher than its outer periphery 102. The upper section 99 of ball valve element 24 that abuts gasket seal ring 98 is properly polished to the appropriate smoothness to provide a proper seal with the gasket seal ring 98.

Other seal constructions are possible such as a simple O-ring or a lip seal. The seal does not need to be constructed for severe compression because the collar 97 provides a controlled upper limit as to the amount of pressure exerted on the seal between the ball valve element 24 and cartridge housing member 56.

The outer surface of housing wall 80 has an annular groove 111 which seats an O-ring 112. The O-ring 112 is sized to seal the cartridge outer periphery with the cavity 22 in lower body member 14 of housing 12.

Rocking of the control stem 42 along the fixed horizontal axis 64 pivots the ball valve element 24 about the pivot axis 64 independently of the rotated position of the ball valve element 24 about movable axis 75. The distal ends 62 of the pin 60 slide along the respective slots 68 and 70 to allow the ball valve element 24 to rotate about axis 64. Rotation of the pin 60 within slots 68 and 70 allows the ball valve element 24 to rotate about axis 75.

The rotation of the ball valve element 24 about axis 64 is limited by the lower stop shoulders 82 and upper stop shoulders 84 of slots 68 and 70 that abut pin 60. The rotation of the ball valve element 24 about axis 64 as illustrated in Figure 4 adjusts the flow rate of the discharged water.

Alternately, or in addition to the stop shoulders 82 and 84, the rotation of the ball valve element 24 about axes 64 and 75 may also be limited by radial edge 85 of the upper opening 58 in the cartridge housing member 56. As clearly shown in Figure 6, the opening 58 may be shaped such that a notch 86 is wide enough to receive the control stem 42. A semi-circular arced edge 87 of approximately 180° extends therefrom symmetrically from notch 86. Two straight rear edges 88 run from the arc and meet to form an angle of approximately 160° at the plane of symmetry 69.

The cartridge is assembled with the gaskets 98 and 112 properly seated. The ball valve element 24 is installed in the cartridge by first placing the ball valve element 24 in the cartridge housing member 56 from the lower opening 92 and extending stem 42 through upper opening 58. The holes 61 are aligned with window 79. Pin 60 is then pushed through window 79 and is press fitted into both holes 61 and is retained by the press fit therein.

The lower opening 92 may optionally have a dimension slightly smaller than the diameter of the ball valve element 24. The ball valve element 24 may be fitted into the chamber 101 through the opening 92 by flexing of the plastic material of the cartridge housing member 56 in proximity to end 92 to allow shoulders 82 to become more distant.

The ball valve element 24 with pin 60 can then slide past shoulders 82. When the plastic is released, the shoulders 82 snap back into place to retain the ball valve element 24 and pin 60 therein. The assembled cartridge 26 is a self contained assembly that can be sold separately as a repair replacement for later installation into the faucet mixer valve 10.

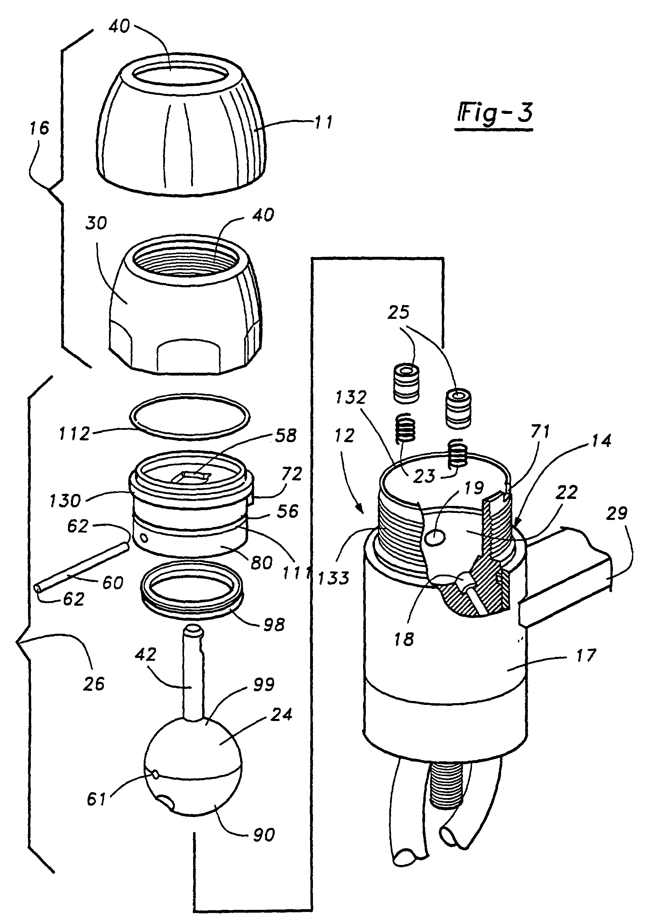

As shown in Figure 3, the assembled cartridge 26 is placed in cavity 22 of the faucet body 14. The slot 71 in base 14 properly positions the cartridge 26 with lug 72 in the cartridge 26 and ledge 130 properly vertically positions the cartridge 26 on a corresponding ledge 132 in base member 14. Threaded cap member 30 is then threaded onto the upright flange 133 to downwardly press the cartridge 26 against ledge 132.

For repairs to the faucet, only those parts that are needed to be replaced, normally only the elastomeric seals 25, are in fact replaced while maintaining the advantages of ease of assembly and reassembly of a cartridge faucet assembly.

The need for a large resilient biasing regulation ring intended to push down the ball valve element 24 against the spring biased sealing elements 25 is eliminated. Gasket seal ring 98 functions solely to prevent leakage between the ball valve element 24 and cartridge housing member 56. The O-ring 112 functions solely to prevent leakage between the cartridge housing member 56 and lower base member 14.

Furthermore, a ball valve element 24 is easily incorporated into a replaceable cartridge assembly 26 without necessitating an increase in the overall height of the valve housing 12 as compared to prior art mixing valves incorporating ball valve elements. The cartridge assembly 26 is easily assembled.

The drive mechanism for this ball valve element provides ease of temperature adjustment no matter at what flow rates. The temperature mixing adjustment does not degrade at higher flow rates. The distal end 45 of the handle 43 maintains a constant distance from the two axes of rotation 64 and 75 thus maintaining the same temperature sensitivity of operation independent of the amount of flow rate.

Variations and modifications are possible without departing from the scope of the present invention as defined by the appended claims.

## Claims

1. A faucet mixer valve (10) having a movable ball valve element (24) mounted in a housing body (12) that defines a cavity (22), said housing body (12) having a plurality of inlet ports (18, 19) and an outlet port (20) in fluid communication with said cavity (22), said ball valve element (24) cooperating with said inlet ports (18, 19) to control liquid flow in both flow rate and temperature mix through said ports, said housing body (12) having a control opening (40) therethrough, said ball valve element (24) having a control stem (42) connected thereto and extending through said control opening (40);
wherein the mixer valve is in cartridge form with a cartridge (26) having a housing member (56), said cartridge housing member (56) having an upper opening (58) for allowing said control stem (42) passing therethrough and a lower end;
said cartridge housing member (56) having a seal seat (94) about said upper opening (58), a sealing gasket (98) being seated in said seal seat (94) about said upper opening (58) and sealingly abuttable against said movable ball valve element (24); and
said cartridge housing member (56) having a first slot (68) therein, wherein a pin (60) transversely extending from said ball valve element (24) is slidably and pivotably received in said first slot (68) such that said ball valve element (24) is rotatable along a first axis (75) that is aligned with said pin (60) and a second axis (64) that is transverse to said first slot (68) and said first axis (75);
**characterized in that** said first slot (68) longitudinally extends in said cartridge housing member (56) between said upper opening (58) and said lower end.

2. A faucet mixer valve (10) according to claim 1, **characterized by**:
said cartridge (26) having a lower opening (92) through which said movable ball valve element (24) protrudes into said cavity (22) in said housing body (12) to be cooperative with said inlet ports (18, 19);
a second longitudinally extending slot (70) diametrically opposite said first longitudinally extending slot (68);
said ball valve element (24) having first and second pin distal ends (62) extending at diametrically opposed sections of said ball valve element (24) with each pin end (62) received in the respective first and second slot (68, 70);
said respective first and second slot (68, 70) having a lower end having an abutment shoulder (82) for abutting said respective pin ends (62) above said lower opening (92); and
said respective pin ends (62) being spaced farther than the diameter of said lower opening (92) such that said ball valve element (24) is retained within said cartridge (26) by said pin ends (62) in said slots (68, 70) above said abutment shoulders (82).

3. A faucet mixer valve (10) according to claim 2, **characterized in that** each longitudinal slot (68, 70) is aligned along a plane of symmetry (69) between said plurality of inlet ports (18, 19).

4. A faucet mixer valve (10) according to claim 3, **characterized by**:
said upper opening (58) of said cartridge (26) being shaped and positioned to be symmetrical about the plane of symmetry (69) containing the axis of said longitudinal slots (68, 70);
said upper opening (58) having a front semi-circular arced edge (87) of approximately 180° and two radially running straight rear edges (88) forming an angle of approximately 160°; and
a notch (86) positioned at the center of the semi-circular arc and sized to laterally receive said control stem (42).

5. A faucet mixer valve (10) having a movable ball valve element (24) mounted in a housing body (12) that defines a cavity (22), said housing body (12) having a plurality of inlet ports (18, 19) and an outlet port (20) in fluid communication with said cavity (22), said ball valve element (24) cooperating with said inlet ports (18, 19) to control liquid flow in both flow rate and temperature mix through said ports, said housing body (12) having a control opening (40) therethrough, said ball valve element (24) having a control stem (42) connected thereto and extending through said control opening (40);
said housing body (12) having a longitudinally extending slot therein; and
a pin (60) transversely extending from said ball valve element (24) and slidably and pivotably received in said longitudinal slot of said housing body (12) such that said ball valve element (24) is rotatable along a first axis (75) that is aligned with said pin (60) and a second axis (64) that is transverse to said longitudinal slot and said first axis (75);
**characterized in that** said longitudinal slot is aligned along a plane of symmetry (69) that is interposed between said plurality of inlet ports (18, 19).

6. A faucet mixer valve (10) according to claim 5, **characterized by**:
said control opening (40) including contoured edges being shaped and positioned to be symmetrical about the plane of symmetry (69) containing the axis of said longitudinal slot;
said contoured edges having a front semi-circular arced section of approximately 180° and two radially running rear lines forming an angle of approximately 160°; and
a notch positioned at the center of the semi-circular arc and sized to laterally receive said control stem (42).

7. A faucet mixer valve (10) according to one of the preceding claims, **characterized in that** said ball valve element (24) has a pair of cold water inlet openings (32, 33) separated by a thin dividing rib (39) and a pair of hot water inlet openings (34, 35) separated by another thin dividing rib (39), wherein a plane of symmetry (69) is interposed between the two pairs of inlet openings (32, 33; 34, 35) when said ball valve element (24) is in an intermediate mix position.

8. A faucet mixer valve (10) as defined in claim 7, **characterized in that** said ball valve element (24) has a pair of outlet openings (36, 37) arranged symmetrically between said cold and hot water inlet openings (32, 33; 34, 35).

9. A ball valve cartridge (26) for a mixer valve (10), comprising:
a movable ball valve element (24) having at least one inlet (32, 33, 34, 35) and an outlet (36, 37);
a cartridge housing member (56) having a lower opening (92) through which said ball valve element (24) protrudes, said cartridge housing member (56) further having an upper opening (58) for allowing a control stem (42) passing therethrough;
said ball valve element (24) being seatable in proximity to inlet ports (18, 19) of said mixer valve (10) below said cartridge (26) such that its at least one inlet (32, 33, 34, 35) is selectively alignable or misalignable with said inlet ports (18, 19);
a sealing gasket (98) being seated between said ball valve element (24) and said cartridge housing member (56) for preventing fluid flow through said upper opening (58) in said cartridge housing member (56); and
said cartridge housing member (56) having a first slot (68) therein, wherein a pin (60) transversely extending from said ball valve element (24) is slidably and pivotably received in said first slot (68);
**characterized in that** said first slot (68) longitudinally extends in said cartridge housing member (56) between said upper opening (58) and said lower opening (92).

10. A ball valve cartridge (26) according to claim 9, **characterized by**:
said movable ball valve element (24) protruding through said lower opening (92) of said cartridge (26) into a recess (22) in a housing body (12) to be cooperative with said inlet ports (18, 19);
a second longitudinally extending slot (70) diametrically opposite said first longitudinally extending slot (68);
said ball valve element (24) having a first and second pin distal end (62) extending at diametrically opposed sections of said ball valve element (24) with each pin end (62) received in the respective first and second slot (68, 70);
said respective pin ends (62) being spaced farther than the diameter of said lower opening (92) such that said ball valve element (24) is retained within said cartridge (26) by said pin ends (62) in said slots (68, 70).

11. A ball valve cartridge (26) according to claim 9 or 10, **characterized in that** said longitudinal slot (68, 70) is aligned along a plane of symmetry (69) between said plurality of inlet ports (18, 19).

12. A ball valve cartridge (26) according to claim 11, **characterized by**:
said upper opening (58) of said cartridge (26) being shaped and positioned to be symmetrical about the plane of symmetry (69) containing the axis of the longitudinal slot (68, 70);
said upper opening (58) having a front semi-circular arced edge (87) of approximately 180° and two radially running straight rear edges (88) forming an angle of approximately 160°; and
a notch (86) positioned at the center of the semi-circular arc and sized to laterally receive said control stem (42).

13. A ball valve cartridge (26) according to claim 11 or 12, **characterized in that** said ball valve element (24) has a pair of cold water inlet openings (32, 33) separated by a thin dividing rib (39) and a pair of hot water inlet openings (34, 35) separated by another thin dividing rib (39), wherein said plane of symmetry (69) is interposed between the two pairs of inlet openings (32, 33; 34, 35) when said ball valve element (24) is in an intermediate mix position.

14. A ball valve cartridge (26) according to claim 13, **characterized in that** said ball valve element (24) has a pair of outlet openings (36, 37) arranged symmetrically between said cold and hot water inlet openings (32, 33; 34, 35).

## Patentansprüche

1. Hahnmischventil (10) mit einem bewegbaren Kugelventilelement (24), das in einem Gehäusekörper (12) montiert ist, der einen Hohlraum (22) begrenzt, wobei der Gehäusekörper (12) eine Mehrzahl von Einlaß-Durchlässen (18, 19) und einen Auslaß-Durchlaß (20) aufweist, die mit dem Hohlraum (22) in Fluidverbindung stehen, wobei das Kugelventilelement (24) mit den Einlaß-Durchlässen (18, 19) zusammenwirkt, um den Flüssigkeitsstrom durch die Durchlässe sowohl in der Durchflußmenge als auch der Temperaturmischung einzustellen, wobei der Gehäusekörper (12) eine durch ihn hindurch geführte Steueröffnung (40) hat, wobei das Kugelventilelement (24) einen Steuerschaft (42) aufweist, der damit verbunden ist und sich durch die Steueröffnung (40) hindurch erstreckt;
wobei das Mischventil eine Kartuschenform hat, mit einer Kartusche (26), die ein Gehäuseteil (56) aufweist, wobei das Kartuschengehäuseteil (56) eine obere Öffnung (58), welche das Hindurchführen des Steuerschafts (42) gestattet, und ein unteres Ende hat;
wobei das Kartuschengehäuseteil (56) einen Dichtungssitz (94) um die obere Öffnung (58) herum aufweist, wobei ein Dichtelement (98) in dem Dichtungssitz (94) um die obere Öffnung (58) herum sitzt und dichtend gegen das bewegbare Kugelventilelement (24) anlegbar ist; und
wobei das Kartuschengehäuseteil (56) einen ersten Schlitz (68) darin hat, wobei ein Stift (60), der sich quer von dem Kugelventilelement (24) weg erstreckt, in dem ersten Schlitz (68) gleitend und schwenkbar aufgenommen ist, so daß das Kugelventilelement (24) entlang einer ersten Achse (75), die mit dem Stift (60) ausgefluchtet ist, und einer zweiten Achse (64), die quer zu dem ersten Schlitz (68) und der ersten Achse (75) steht, drehbar ist;
**dadurch gekennzeichnet, daß** der erste Schlitz (68) sich längs in dem Kartuschengehäuseteil (56) zwischen der oberen Öffnung (58) und dem unteren Ende erstreckt.

2. Hahnmischventil (10) nach Anspruch 1 **gekennzeichnet durch**:
die Kartusche (26) hat eine untere Öffnung (92), **durch** die das bewegbare Kugelventilelement (24) in den Hohlraum (22) im Gehäusekörper (12) vorsteht, um mit den Einlaß-Durchlässen (18, 19) zusammenzuwirken;
einen zweiten sich längs erstreckenden Schlitz (70), der dem ersten sich längs erstreckenden Schlitz (68) diametral gegenüberliegt;
das Kugelventilelement (24) weist erste und zweite distale Stiftenden (62) auf, die sich an diametral gegenüberliegenden Abschnitten des Kugelventilelements (24) erstrecken, wobei jedes Stiftende (62) in dem jeweiligen ersten und zweiten Schlitz (68, 70) aufgenommen ist;
der jeweilige erste und zweite Schlitz (68, 70) hat ein unteres Ende mit einer Anlageschulter (82) zum Anlegen der jeweiligen Stiftenden (62) oberhalb der unteren Öffnung (92); und
die jeweiligen Stiftenden (62) sind weiter beabstandet als der Durchmesser der unteren Öffnung (92), so daß das Kugelventilelement (24) in der Kartusche (26) **durch** die Stiftenden (62) in den Schlitzen (68, 70) oberhalb der Anlageschultern (82) gehalten ist.

3. Hahnmischventil (10) nach Anspruch 2, **dadurch gekennzeichnet, daß** jeder sich längs erstreckende Schlitz (68, 70) entlang einer Symmetrieebene (69) zwischen der Mehrzahl von Einlaß-Durchlässen (18, 19) ausgerichtet ist.

4. Hahnmischventil (10) nach Anspruch 3, **gekennzeichnet durch**:
die obere Öffnung (58) der Kartusche (26) ist derart geformt und positioniert, daß sie bezüglich der Symmetrieebene (69), die die Achse der sich längs erstreckenden Schlitze (68, 70) enthält, symmetrisch liegt;
die obere Öffnung (58) hat eine vordere halbkreisförmig gebogene Kante (87) von etwa 180° und zwei radial verlaufende gerade hintere Kanten (88), die einen Winkel von etwa 160° einschließen; und
eine Aussparung (86) ist an dem Zentrum des halbkreisförmigen Bogens angeordnet und dimensioniert, um den Steuerschaft (42) quer aufzunehmen.

5. Hahnmischventil (10) mit einem bewegbaren Kugelventilelement (24), das in einem Gehäusekörper (12) montiert ist, der einen Hohlraum (22) begrenzt, wobei der Gehäusekörper (12) eine Mehrzahl von Einlaß-Durchlässen (18, 19) und einen Auslaß-Durchlaß (20) aufweist, die mit dem Hohlraum (22) in Fluidverbindung stehen, wobei das Kugelventilelement (24) mit den Einlaß-Durchlässen (18, 19) zusammenwirkt, um den Flüssigkeitsstrom durch die Durchlässe sowohl in der Durchflußmenge als auch der Temperaturmischung einzustellen, wobei der Gehäusekörper (12) eine durch ihn hindurch geführte Steueröffnung (40) hat, wobei das Kugelventilelement (24) einen Steuerschaft (42) aufweist, der damit verbunden ist und sich durch die Steueröffnung (40) hindurch erstreckt;
wobei der Gehäusekörper (12) einen sich darin längs erstreckenden Schlitz hat; und
wobei ein Stift (60), der sich quer von dem Kugelventilelement (24) weg erstreckt, in dem sich längs erstreckenden Schlitz des Gehäusekörpers (12) gleitend und schwenkbar aufgenommen ist, so daß das Kugelventilelement (24) entlang einer ersten Achse (75), die mit dem Stift (60) ausgefluchtet ist, und einer zweiten Achse (64), die quer zu dem sich längs erstreckenden Schlitz und der ersten Achse (75) steht, drehbar ist;
**dadurch gekennzeichnet, daß** der sich längs erstreckende Schlitz entlang einer Symmetrieebene (69) ausgerichtet ist, die zwischen der Mehrzahl von Einlaß-Durchlässen (18, 19) liegt.

6. Hahnmischventil (10) nach Anspruch 5, **gekennzeichnet durch**:
die Steueröffnung (40) weist konturierte Kanten auf, die so geformt und positioniert sind, daß sie symmetrisch bezüglich der Symmetrieebene (69) liegen, die die Achse des sich längs erstreckenden Schlitzes enthält;
die konturierten Kanten haben einen vorderen halbkreisförmig gebogenen Abschnitt von etwa 180° und zwei radial verlaufende hintere Linien, die einen Winkel von etwa 160° einschließen; und
eine Aussparung ist an dem Zentrum des halbkreisförmigen Bogens angeordnet und dimensioniert, um den Steuerschaft (42) quer aufzunehmen.

7. Hahnmischventil (10) nach einem der vorhergehenden Ansprüche, **dadurch gekennzeichnet, daß** das Kugelventilelement (24) ein Paar von Kaltwasser-Einlaßöffnungen (32, 33), die durch eine dünne Trennrippe (39) separiert sind, und ein Paar von Warmwasser-Einlaßöffnungen (34, 35) aufweist, die durch eine andere dünne Trennrippe (39) separiert sind, wobei eine Symmetrieebene (69) zwischen den zwei Paaren von Einlaßöffnungen (32, 33; 34, 35) liegt, wenn das Kugelventilelement (24) sich in einer Zwischenmischstellung befindet.

8. Hahnmischventil (10) nach Anspruch 7, **dadurch gekennzeichnet, daß** das Kugelventilelement (24) ein Paar von Auslaßöffnungen (36, 37) aufweist, die symmetrisch zwischen den Kalt- und Warmwasser-Einlaßöffnungen (32, 33; 34, 35) angeordnet sind.

9. Kugelventilkartusche (26) für ein Mischventil (10), umfassend:
ein bewegbares Kugelventilelement (24) mit mindestens einem Einlaß (32, 33, 34, 35) und einem Auslaß (36, 37);
ein Kartuschengehäuseteil (56) mit einer unteren Öffnung (92), durch die das Kugelventilelement (24) vorsteht, wobei das Kartuschengehäuseteil (56) ferner eine obere Öffnung (58) hat, welche das Hindurchführen eines Steuerschafts (42) gestattet;
wobei das Kugelventilelement (24) in der Nähe von Einlaß-Durchlässen (18, 19) des Mischventils (10) unterhalb der Kartusche (26) einsetzbar ist, so daß sein mindestens einer Einlaß (32, 33, 34, 35) wahlweise mit den Einlaß-Durchlässen (18, 19) in Flucht oder außer Flucht bringbar ist;
wobei ein Dichtelement (98) zwischen dem Kugelventilelement (24) und dem Kartuschengehäuseteil (56) eingesetzt ist, um eine Fluidströmung durch die obere Öffnung (58) in das Kartuschengehäuseteil (56) zu verhindern; und
wobei das Kartuschengehäuseteil (56) einen ersten Schlitz (68) darin aufweist, wobei ein Stift (60), der sich quer von dem Kugelventilelement (24) weg erstreckt, in dem ersten Schlitz (68) gleitend und schwenkbar aufgenommen ist;
**dadurch gekennzeichnet, daß** der erste Schlitz (68) sich längs in dem Kartuschengehäuseteil (56) zwischen der oberen Öffnung (58) und der unteren Öffnung (92) erstreckt.

10. Kugelventilkartusche (26) nach Anspruch 9, **gekennzeichnet durch**:
das bewegbare Kugelventilelement (24) steht **durch** die untere Öffnung (92) der Kartusche (26) in eine Aussparung (22) in einem Gehäusekörper (12) vor, um mit den Einlaß-Durchlässen (18, 19) zusammenzuwirken;
einen zweiten sich längs erstreckenden Schlitz (70), der dem ersten sich längs erstreckenden Schlitz (68) diametral gegenüberliegt;
das Kugelventilelement (24) weist erste und zweite distale Stiftenden (62) auf, die sich an diametral gegenüberliegenden Abschnitten des Kugelventilelements (24) erstrecken, wobei jedes Stiftende (62) in dem jeweiligen ersten und zweiten Schlitz (68, 70) aufgenommen ist;
die jeweiligen Stiftenden (62) sind weiter beabstandet als der Durchmesser der unteren Öffnung (92), so daß das Kugelventilelement (24) in der Kartusche (26) **durch** die Stiftenden (62) in den Schlitzen (68, 70) gehalten ist.

11. Kugelventilkartusche (26) nach Anspruch 9 oder 10, **dadurch gekennzeichnet, daß** der sich längs erstreckende Schlitz (68, 70) entlang einer Symmetrieebene (69) zwischen der Mehrzahl von Einlaß-Durchlässen (18, 19) ausgerichtet ist.

12. Kugelventilkartusche (26) nach Anspruch 11, **gekennzeichnet durch**:
die obere Öffnung (58) der Kartusche (26) ist so geformt und positioniert, daß sie bezüglich der Symmetrieebene (69), die die Achse des sich längs erstreckenden Schlitzes (68, 70) enthält, symmetrisch liegt;
die obere Öffnung (58) hat eine vordere halbkreisförmig gebogene Kante (87) von etwa 180° und zwei radial verlaufende gerade hintere Kanten (88), die einen Winkel von etwa 160° einschließen; und
eine Aussparung (86) ist an dem Zentrum des halbkreisförmigen Bogens angeordnet und dimensioniert, um den Steuerschaft (42) quer aufzunehmen.

13. Kugelventilkartusche (26) nach Anspruch 11 oder 12, **dadurch gekennzeichnet, daß** das Kugelventilelement (24) ein Paar von Kaltwasser-Einlaßöffnungen (32, 33), die durch eine dünne Trennrippe (39) separiert sind, und ein Paar von Warmwasser-Einlaßöffnungen (34, 35) aufweist, die durch eine andere dünne Trennrippe (39) separiert sind, wobei die Symmetrieebene (69) zwischen den zwei Paaren von Einlaßöffnungen (32, 33; 34, 35) liegt, wenn sich das Kugelventilelement (24) in einer Zwischenmischstellung befindet.

14. Kugelventilkartusche (26) nach Anspruch 13, **dadurch gekennzeichnet, daß** das Kugelventilelement (24) ein Paar von Auslaßöffnungen (36, 37) aufweist, die symmetrisch zwischen den Kalt- und Warmwasser-Einlaßöffnungen (32, 33; 34, 35) angeordnet sind.

## Revendications

1. Robinet mitigeur (10) comportant un élément obturateur sphérique mobile (24) monté dans un corps formant logement (12) qui définit une cavité (22), ledit corps formant logement (12) comportant de multiples lumières d'entrée (18, 19) et une lumière de sortie (20) en communication fluidique avec ladite cavité (22), ledit élément obturateur sphérique (24) coopérant avec lesdites lumières d'entrée (18, 19) pour régler un écoulement de liquide tant en termes de débit qu'en termes de température de mélange à travers lesdits orifices, ledit corps formant logement (12) étant traversé par une ouverture de réglage (40), et ledit élément obturateur sphérique (24) étant muni d'une tige de réglage (42) reliée à lui et s'étendant à travers ladite ouverture de réglage (40);
le robinet mitigeur étant du type à cartouche comportant une cartouche (26) pourvue d'un organe formant boîtier (56), ledit organe formant boîtier (56) de la cartouche comportant une ouverture supérieure (58) destinée à permettre le passage de ladite tige de réglage (42), et une extrémité inférieure;
ledit organe formant boîtier (56) de la cartouche comportant un siège de fermeture étanche (94) autour de ladite ouverture supérieure (58), un joint d'étanchéité (98) étant logé dans ledit siège de fermeture étanche (94) autour de ladite ouverture supérieure (58) et étant apte à venir en butée de manière étanche contre ledit élément obturateur sphérique mobile (24); et
ledit organe formant boîtier (56) de la cartouche comportant une première fente (68) dans laquelle un axe (60) qui s'étend transversalement depuis ledit élément obturateur sphérique (24) est reçu de manière coulissante et pivotante afin que ledit élément obturateur sphérique (24) puisse tourner suivant un premier axe (75) aligné avec ledit axe (60) et suivant un second axe (64) transversal par rapport à ladite première fente (68) et audit premier axe (75);
**caractérisé en ce que** ladite première fente (68) s'étend longitudinalement dans ledit organe formant boîtier (56) de la cartouche entre ladite ouverture supérieure (58) et ladite extrémité inférieure.

2. Robinet mitigeur (10) selon la revendication 1, **caractérisé en ce que** :
ladite cartouche (26) comporte une ouverture inférieure (92) à travers laquelle ledit élément obturateur sphérique mobile (24) fait saillie dans ladite cavité (22) définie dans ledit corps formant logement (12) pour pouvoir coopérer avec lesdites lumières d'entrée (18, 19);
une seconde fente s'étendant longitudinalement (70) est prévue de manière diamétralement opposée à ladite première fente s'étend longitudinalement (68);
ledit élément obturateur sphérique (24) comporte des première et seconde extrémités d'axe distales (62) qui s'étendent au niveau de parties diamétralement opposées dudit élément obturateur sphérique (24), les extrémités d'axe (62) étant reçues dans les première et seconde fentes (68, 70) respectives;
lesdites première et seconde fentes (68, 70) respectives ont des extrémités inférieures respectives comportant un épaulement formant butée (82) destiné à recevoir en butée ladite extrémité d'axe (62) correspondante au-dessus de ladite ouverture inférieure (92); et
lesdites extrémités d'axe (62) respectives sont espacées d'une distance supérieure au diamètre de ladite ouverture inférieure (92) afin que ledit élément obturateur sphérique (24) soit retenu à l'intérieur de ladite cartouche (26) par lesdites extrémités d'axe (62) dans lesdites fentes (68, 70) au-dessus desdits épaulements formant butées (82).

3. Robinet mitigeur (10) selon la revendication 2, **caractérisé en ce que** chaque fente longitudinale (68, 70) est alignée le long d'un plan de symétrie (69) s'étendant entre lesdites multiples lumières d'entrée (18, 19).

4. Robinet mitigeur (10) selon la revendication 3, **caractérisé en ce que** :
ladite ouverture supérieure (58) de ladite cartouche (26) est conformée et positionnée pour être symétrique autour du plan de symétrie (69) contenant l'axe desdites fentes longitudinales (68, 70);
ladite ouverture supérieure (58) présente un bord avant arqué semi-circulaire (87) d'approximativement 180° et deux bords arrière droits s'étendant radialement (88) qui forment un angle d'approximativement 160°; et
une encoche (86) est positionnée au centre de l'arc semi-circulaire et dimensionnée pour recevoir latéralement ladite tige de réglage (42).

5. Robinet mitigeur (10) comportant un élément obturateur sphérique mobile (24) monté dans un corps formant logement (12) qui définit une cavité (22), ledit corps formant logement (12) comportant de multiples lumières d'entrée (18, 19) et une lumière de sortie (20) en communication fluidique avec ladite cavité (22), ledit élément obturateur sphérique (24) coopérant avec lesdites lumières d'entrée (18, 19) pour régler un écoulement de liquide tant en termes de débit qu'en termes de température de mélange à travers lesdits orifices, ledit corps formant logement (12) étant traversé par une ouverture de réglage (40), et ledit élément obturateur sphérique (24) étant muni d'une tige de réglage (42) reliée à lui et s'étendant à travers ladite ouverture de réglage (40);
ledit corps formant logement (12) comportant une fente s'étendant longitudinalement; et
un axe (60) s'étendant transversalement depuis ledit élément obturateur sphérique (24) et étant reçu de manière coulissante et pivotante dans ladite fente longitudinale dudit corps formant logement (12) afin que ledit élément obturateur sphérique (24) puisse tourner suivant un premier axe (75) aligné avec ledit axe (60) et suivant un second axe (64) transversal par rapport à ladite fente longitudinale et audit premier axe (75);
**caractérisé en ce que** ladite fente longitudinale est alignée le long d'un plan de symétrie (69) interposé entre lesdites multiples lumières d'entrée (18, 19).

6. Robinet mitigeur (10) selon la revendication 5, **caractérisé en ce que** :
ladite ouverture de réglage (40) comprend des bords profilés qui sont conformés et positionnés pour être symétriques autour du plan de symétrie (69) contenant l'axe de ladite fente longitudinale;
lesdits bords profilés comportent une partie avant arquée semi-circulaire d'approximativement 180° et deux lignes arrière s'étendant radialement qui forment un angle d'approximativement 160°; et
une encoche est positionnée au centre de l'arc semi-circulaire et dimensionnée pour recevoir latéralement ladite tige de réglage (42).

7. Robinet mitigeur (10) selon l'une quelconque des revendications précédentes, **caractérisé en ce que** ledit élément obturateur sphérique (24) comporte deux orifices d'entrée d'eau froide (32, 33) séparés par une nervure de séparation mince (39) et deux orifices d'entrée d'eau chaude (34, 35) séparés par une autre nervure de séparation mince (39), un plan de symétrie (69) étant interposé entre les deux paires d'orifices d'entrée (32, 33; 34, 35) lorsque ledit élément obturateur sphérique (24) est dans une position de mélange intermédiaire.

8. Robinet mitigeur (10) tel que défini dans la revendication 7, **caractérisé en ce que** ledit élément obturateur sphérique (24) comporte deux orifices de sortie (36, 37) disposés de manière symétrique entre lesdits orifices d'entrée d'eau froide et chaude (32, 33; 34, 35).

9. Cartouche à obturateur sphérique (26) pour un robinet mitigeur (10), comprenant :
un élément obturateur sphérique mobile (24) comportant au moins un orifice d'entrée (32, 33, 34, 35) et un orifice de sortie (36, 37);
un organe formant boîtier de cartouche (56) comportant une ouverture inférieure (92) à travers laquelle ledit élément obturateur sphérique (24) fait saillie, ledit organe formant boîtier (56) de la cartouche comportant également une ouverture supérieure (58) destinée à permettre le passage d'une tige de réglage (42);
ledit élément obturateur sphérique (24) étant apte à venir en appui à proximité de lumières d'entrée (18, 19) dudit robinet mitigeur (10) au-dessous de ladite cartouche (26) afin que son orifice d'entrée (32, 33, 34, 35) puisse être sélectivement aligné ou non aligné avec lesdites lumières d'entrée (18, 19);
un joint d'étanchéité (98) logé entre ledit élément obturateur sphérique (24) et ledit organe formant boîtier (56) de la cartouche pour empêcher un écoulement de fluide à travers ladite ouverture supérieure (58) dudit organe formant boîtier (56) de la cartouche; et
ledit organe formant boîtier (56) de la cartouche comportant une première fente (68) dans laquelle un axe (60) qui s'étend transversalement depuis ledit élément obturateur sphérique (24) est reçu de manière coulissante et pivotante;
**caractérisée en ce que** ladite première fente (68) s'étend longitudinalement dans ledit organe formant boîtier (56) de la cartouche entre ladite ouverture supérieure (58) et ladite ouverture inférieure (92).

10. Cartouche à obturateur sphérique (26) selon la revendication 9, **caractérisée en ce que** :
ledit élément obturateur sphérique mobile (24) fait saillie à travers ladite ouverture inférieure (92) de ladite cartouche (26) dans une cavité (22) définie dans un corps formant logement (12) pour pouvoir coopérer avec lesdites lumières d'entrée (18, 19);
une seconde fente s'étendant longitudinalement (70) est prévue de manière diamétralement opposée à ladite première fente s'étend longitudinalement (68);
ledit élément obturateur sphérique (24) comporte des première et seconde extrémités d'axe distales (62) qui s'étendent au niveau de parties diamétralement opposées dudit élément obturateur sphérique (24), les extrémités d'axe (62) étant reçues dans les première et seconde fentes (68, 70) respectives; et
lesdites extrémités d'axe (62) respectives sont espacées d'une distance supérieure au diamètre de ladite ouverture inférieure (92) afin que ledit élément obturateur sphérique (24) soit retenu à l'intérieur de ladite cartouche (26) par lesdites extrémités d'axe (62) dans lesdites fentes (68, 70).

11. Cartouche à obturateur sphérique (26) selon la revendication 9 ou 10, **caractérisée en ce que** ladite fente longitudinale (68, 70) est alignée le long d'un plan de symétrie (69) s'étendant entre lesdites multiples lumières d'entrée (18, 19).

12. Cartouche à obturateur sphérique (26) selon la revendication 11, **caractérisée en ce que** :
ladite ouverture supérieure (58) de ladite cartouche (26) est conformée et positionnée pour être symétrique autour du plan de symétrie (69) contenant l'axe de la fente longitudinale (68, 70);
ladite ouverture supérieure (58) présente un bord avant arqué semi-circulaire (87) d'approximativement 180° et deux bords arrière droits s'étendant radialement (88) qui forment un angle d'approximativement 160°; et
une encoche (86) est positionnée au centre de l'arc semi-circulaire et dimensionnée pour recevoir latéralement ladite tige de réglage (42).

13. Cartouche à obturateur sphérique (26) selon la revendication 11 ou 12, **caractérisée en ce que** ledit élément obturateur sphérique (24) comporte deux orifices d'entrée d'eau froide (32, 33) séparés par une nervure de séparation mince (39) et deux orifices d'entrée d'eau chaude (34, 35) séparés par une autre nervure de séparation mince (39), ledit plan de symétrie (69) étant interposé entre les deux paires d'orifices d'entrée (32, 33; 34, 35) lorsque ledit élément obturateur sphérique (24) est dans une position de mélange intermédiaire.

14. Cartouche à obturateur sphérique (26) selon la revendication 13, **caractérisée en ce que** ledit élément obturateur sphérique (24) comporte deux orifices de sortie (36, 37) disposés de manière symétrique entre lesdits orifices d'entrée d'eau froide et chaude (32, 33; 34, 35).
